(19) Europäisches Patentamt
European Patent Office
Office européen des brevets

(11) **EP 4 059 965 A1**

(12) **EUROPÄISCHE PATENTANMELDUNG**

(43) Veröffentlichungstag:
**21.09.2022 Patentblatt 2022/38**

(21) Anmeldenummer: **21163062.9**

(22) Anmeldetag: **17.03.2021**

(51) Internationale Patentklassifikation (IPC):
**C08B 30/20** (2006.01) **A23L 29/212** (2016.01)

(52) Gemeinsame Patentklassifikation (CPC):
**C08B 30/20; A23L 29/212**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Südzucker AG**
**68165 Mannheim (DE)**

(72) Erfinder:
• **DI Dr Dietmar GRÜLL**
**3442 Langenschönbichl (AT)**
• **DI Dr Helene PERSAK**
**1140 Wien (AT)**
• **DI Robert WITTENBERGER**
**3434 Tulbling (AT)**

(74) Vertreter: **SONN Patentanwälte OG**
**Riemergasse 14**
**1010 Wien (AT)**

(54) **VERWENDUNG VON WACHSWEIZENSTÄRKE ALS VISKOSITÄTSVERBESSERER**

(57) Die vorliegende Erfindung betrifft die Verwendung von Wachsweizenstärke als Viskositätsverbesserer in einer flüssigen bzw. zähflüssigen Zusammensetzung, wobei die viskositätsverbesserte Zusammensetzung einen im wesentlichen gleichmäßigen Verlauf des Speichermoduls G' über einen Zeitraum von 6 Wochen zeigt.

**Figur 1: Langzeitrheologie G' Mayonnaise (Probe F3 WMS170°/60' und Probe F4 WWS170°C/60')**

**Beschreibung**

Der Rohstoff Stärke wird aus pflanzlichen Produkten, hauptsächlich Getreide und Kartoffel, gewonnen, wobei in subtropischen Regionen auch noch andere Pflanzenprodukte industriell zur Stärkegewinnung genutzt werden. Stärken kommen allgemein als Knollen-, Getreide- oder Leguminose-Stärke vor, z.B. Erbsenstärke, Maisstärke, Kartoffelstärke, Amaranthstärke, Reisstärke, Weizenstärke, Gerstenstärke, Tapiokastärke und Sagostärke. Stärken natürlichen Ursprungs haben in der Regel einen Amylosegehalt von 20 bis 30 Gew. %, abhängig von der Pflanzenart, aus der sie gewonnen werden.

Chemisch betrachtet stellt Stärke eine Mischung von zwei strukturell unterschiedlichen Polyglucanen dar, nämlich Amylose und Amylopektin, welche beide aus einer Vielzahl von verknüpften Glucosemolekülen bestehen. Amylose ist durch eine nahezu unverzweigte lineare Struktur verknüpfter Glucoseeinheiten gekennzeichnet, im Amylopektin sind zahlreiche kürzere Moleküle amyloseähnlicher Struktur zu einer größeren verzweigten Struktur gebunden.

Die üblichen natürlichen Stärken enthalten, abhängig von der Pflanzenart aus welcher sie gewonnen werden, etwa 15% bis 30% Amylose. Spezielle, durch Kreuzung oder gezielte Genmanipulation gewonnene Pflanzengenotype können auch andere Anteile der beiden Stärkemoleküle enthalten. Bekannt sind sogenannte Hochamylosestärken mit einem Amylosegehalt bis zu 70%, auch sogenannte Amylopektinstärken bekannt, welche bis zu 98% Amylopektin enthalten. Eine derartige Amylopektinstärke ist beispielsweise die Wachsmaisstärke, welche aus einem Maisgenotyp gewonnen wird, bei dem die produzierte Stärke nahezu amylosefrei ist. Der Ausdruck "wachsartig" oder englisch "waxy" rührt von der Tatsache her, dass das Maiskorn ein wachsartiges Aussehen hat.

Auch für Weizen sind derartige Pflanzengenotype bekannt, aus denen nahezu amylosefreie Stärke, auch Wachsweizenstärke genannt, gewonnen werden können.

WO 2019/133836 A1 offenbart Backwaren mit verbesserten Eigenschaften, die vorgelatinierte Wachsmaniokstärke enthalten, gegebenenfalls in Mischung mit anderen Stärkekomponenten wie Wachsstärken auf der Basis von Weizen, Reis, Kartoffeln, Mais, Hafer, Sago, Pfeilwurzeln, Erbsen, Bohnen, Linsen und anderen Hülsenfrüchten. Die Backwaren enthalten zwischen 1 Gew .-% und 10 Gew .-% Wachsmaniokstärke und haben die gleiche oder eine bessere Krümelfestigkeit als Backwaren unter Verwendung chemisch modifizierter Stärken.

WO 2019/089656 A1 beschreibt eine Stärkemischung, die 40-85% (Gew./Gew.) einer nicht modifizierten, amylosehältigen Stärke und 15-60% (Gew./Gew.) einer nicht chemisch inhibierten Stärke enthält. Die Stärkemischung hat beim Kochen in Wasser auch noch nach mehreren Gefrier-Auftau-Zyklen eine hohe Viskosität. Es wird offenbart, dass eine solche Stärkemischung in einer Vielzahl von Lebensmittel- und Getränkezusammensetzungen, insbesondere gefrorenen Saucen und Soßen, nützlich ist. Die Stärke kann eine beliebige Sorte sein, einschließlich beispielsweise Mais, Kartoffel, Süßkartoffel, Gerste, Weizen, Reis, Sago, Amaranth, Tapioka (Maniok), Pfeilwurzel, Canna, Erbse, Linse, Fava (Acker), Banane, Hafer, Roggen, Triticale oder Sorghum, wobei die nicht chemisch inhibierte Stärke auch amylosearme (wachsartige) Sorten solcher Stärken sein können.

WO 2019/055381 A1 offenbart thermisch inhibierte wachsartige Maniokstärken und daraus hergestellte essbare Zusammensetzungen. Solche Zusammensetzungen können andere essbare Standardbestandteile enthalten, beispielsweise andere Stärken und/oder Mehle aus einer beliebigen Quelle (z. B. Weizen, Mais, Reis, Kartoffeln, Hülsenfrüchte, Pfeilwurzeln, Sorghum, Sago usw. sowie wachsartige oder amylosereiche Varianten davon).

WO 2019/005861 A1 ist auf vorverkleisterte Stärken und Verfahren zu deren Herstellung und Verwendung gerichtet, wobei die vorverkleisterten Stärken ausgewählt sind aus Tapioka- oder Maniokstärke, Kartoffelstärke, Reisstärke oder Weizenstärke, Stärken aus Eicheln, Pfeilwurzel, Arrakacha , Bananen, Gerste, Brotfrucht, Buchweizen, Canna, Colacasia, Katakuri, Kudzu, Malanga, Hirse, Hafer, Oca, polynesische Pfeilwurzel, Sago, Sorghum, Süßkartoffeln, Roggen, Taro, Kastanien, Wasserkastanien, Yamswurzeln oder Bohnen wie B. Favas, Linsen, Mungobohnen, Erbsen oder Kichererbsen, die Stärken können wachsartig oder nicht wachsartig sein.

WO 2018/112383 A1 und US 2019/0380370 A1 betreffen inhibierte Wachsstärken auf der Basis von Mais, Weizen oder Tapioka mit einem Amylopektingehalt im Bereich von 90-100% und einem Sedimentationsvolumen im Bereich von 10-50 m/g, wobei die Amylopektinfraktion der inhibierten Wachsstärke nicht mehr als 48,5% mittellange Verzweigungen mit einer Kettenlänge von 13-24 aufweist und die Stärke nicht vorverkleisterte ist. Solche Stärken können beim Verkleistern oder Gelatinieren eine nicht kohäsive, glatte Textur aufweisen und sind tolerant gegenüber Verarbeitungsbedingungen (wie Hitze, Scherung und/oder extremen pH-Werten), außerdem weisen sie rheologische und strukturelle Stabilität über eine gewünschte Haltbarkeit auch unter Kühl- und/oder Gefrier-/Auftaubedingungen auf.

WO 2014/042537 A1 offenbart ein Verfahren zur Herstellung von thermisch inhibierter Stärke, welches zu einem viskostabilen Stärkeprodukt führt. Das Verfahren geht von einer alkalischen Stärke mit einem pH-Wert, gemessen in einer 20% (Gew./Vol.) wässrigen Dispersion, von zwischen 9,1 und 11,2 aus, wobei unter anderem der Wassergehalt der Stärke auf zwischen 2 und 22 Gew.-% eingestellt, gefolgt von Erhitzen der Stärke zwischen 130 und 190 °C, insbesondere zwischen 140 und 180 °C, zur thermischen Inhibierung der Stärke. Die zu verwendende Stärke kann jede übliche Art von Stärke sein, einschließlich Mais, Kartoffel, Tapioka, Reis, Weizen usw. und kann mindestens z.B. 70% (Gew./Gew.) Amylopektin.

WO 03/075681 A1 beschreibt chemisch vernetzte und/oder substituierte wachsartige Weizenstärke, die gegenüber sauren Bedingungen zwischen pH 3 und einem pH-Wert von weniger als 7 stabil ist, gefrier- und auftaustabil ist und eine derartige Weizenstärke enthaltende Lebensmittelprodukte, die ein glattes und cremiges Mundgefühl aufweisen.

WO 02/096220 A1 beschreibt teilweise wachsartiges Weizenmehl mit einem Amylosegehalt von 10 Gew .-% bis 20 Gew .-% sowie Backwaren, die aus einem Mehl oder einer Mehlmischung hergestellt sind, die ein solches Weizenmehl enthält.

US 2018/0263268 A1 ist auf einen beschichteten Snack gerichtet, der unter Verwendung von zwei Stärkekomponenten hergestellt wird, von denen eine sprühgekochte agglomerierte wachsartige Maisstärke mit einer bestimmten Spitzenzeit bis zur Hydratationsviskosität ist. Es wird auch die Verwendung von wachsartiger Weizenstärke anstelle der wachsartigen Maisstärke offenbart.

US 2015/0239994 A1 stellt ein Verfahren zur Herstellung einer inhibierten Stärke sowie die Verwendung der inhibierten Stärke zur Herstellung eines Lebensmittelprodukts zur Verfügung, wobei das Verfahren das Behandeln der teilweise raffinierten Stärke mit einem Bleichmittel umfasst, um eine inhibierte Stärke bereitzustellen. Die Quelle der Stärke ist ausgewählt aus der Gruppe bestehend aus Wachsmais (Mais), Wachsreis, Wachsweizen, Wachs-Sorghum, Wachsgerste und Wachskartoffel. Zu den Nahrungsmitteln, die durch die Verwendung der inhibierten Stärken verbessert werden können, gehören säurereiche Lebensmittel (pH <3,7) wie Tortenfüllungen auf Fruchtbasis, Babynahrung und dergleichen; saure Lebensmittel (pH 3,7-4,5) wie Produkte auf Tomatenbasis; und säurearme Lebensmittel (pH> 4,5) wie Soßen, Saucen und Suppen.

US 2007/0122536 A1 offenbart Verfahren zur Herstellung von Lebensmittelprodukten, umfassend Weizen- und/oder Roggenmehl und zugesetztes Fett, wobei zur Verringerung des Fettgehalts in dem Lebensmittelprodukt das Mehl durch 0,5 bis 100 Gew .-% wachsartiges Weizenmehl ersetzt wird.

US 2003/0138541 A1 betrifft Teigzusammensetzungen, die etwa 50% bis etwa 70% eines Materials auf Stärkebasis und Kartoffelflanulen umfassen, sowie daraus hergestellte Lebensmittelprodukte. Das Material auf Stärkebasis umfasst Maisstärke, Weizenstärke, Reisstärke, Wachsmaisstärke, Haferstärke, Cassaya-Stärke, Wachsgerste, Wachsreisstärke, Klebreisstärke, Süßreisstärke, Amioka, Kartoffelstärke, Tapiokastärke und Mischungen davon und kann physikalisch oder chemisch verändert sein.

US 2003/0008049 A1 stellt ein lagerstabiles schwimmfähiges Wachskorn bereit, wobei das Wachskorn wachsartiges Triticale und wachsartiger Weizen sein kann. Die Stärke im Wachskorn ist zur Gänze verkleistert und die gekochten Wachskörner können längere Zeit in luftdichten oder herkömmlichen Getreidebehältern gelagert werden. Ein 25 Sekunden langes Rösten des getrockneten Produkts bei 204°C wird beschrieben.

US 2002/0037352 A1 ist auf ein Vollkorn-Wachsweizenmehl oder Stärke gerichtet und beschreibt auch ein Verfahren zur Herstellung eines derartigen Weizenmehls, einschließlich der Herstellung eines Ausgangsmehls mit einer definierten Größeneinstufung ausgehend von Vollkorn-Wachsweizenkörnern und einer Wärme-Feuchtigkeits-Behandlung einschließlich Verkleisterung der Stärke zwischen etwa 15 und etwa 99% innerhalb von weniger als etwa 5 Minuten. Die Verwendung eines solchen wachsartigen Weizenmehls oder einer solchen Stärke in verschiedenen Nahrungsmitteln wird ebenfalls offenbart.

EP 2 866 581 B1 betrifft ein Verfahren zur Herstellung von thermisch inhibierter Stärke durch thermische Behandlung in einem Wendelschwingförderer, die Stärke kann dabei beispielsweise von Weizen mit niedrigem Amylosegehalt stammen.

CN 104759309 A offenbart ein Herstellungsverfahren für wachsartiges Weizenpulver, umfassend eine wiederholte Befeuchtungs- und Benetzungsbehandlung des wachsartigen Weizens bei einer Temperatur von nicht über 20 bis 30 °C.

Überraschend wurde nun gefunden, dass eine Wachsweizenstärke, insbesondere eine physikalisch und/oder chemisch modifizierte Wachsweizenstärke, als Viskositätsverbesserer sowohl im Lebensmittel- als auch im nicht-Lebensmittelbereich überragende Eigenschaften aufweist, die ihre Verwendung in dem jeweiligen Gebiet günstig erscheinen lassen. Speziell im Lebensmittelbereich geht diese Verwendung als Viskositätsverbesserer mit einer verbesserten Stabilisierung der jeweiligen Lebensmittel einher, besonders günstig ist es, wenn die Lebensmittel einen pH im sauren Bereich aufweisen.

Ebenfalls wurde überraschend gefunden, dass eine chemisch modifizierte Wachsweizenstärke eine gegenüber einer gleichartig chemisch modifizierten Wachsmaisstärke erhöhte Säurestabilität aufweist, wodurch eine Verwendung einer derart chemisch modifizierten Wachsweizenstärke in all jenen Bereichen günstig erscheint, wo eine erhöhte Säurestabilität gewünscht ist.

Somit ist erfindungsgemäß die Verwendung von Wachsweizenstärke als Viskositätsverbesserer in einer flüssigen bzw. zähflüssigen Zusammensetzung vorgesehen, wobei die Zusammensetzung einen im wesentlichen gleichmäßigen Verlauf des Speichermoduls G' über einen Zeitraum von 6 Wochen zeigt. Das Speichermodul ist dabei zusammen mit dem Verlustmodul Teil des komplexen Schubmoduls, allgemein hat das komplexe Schubmodul die Form einer komplexen Zahl:

$$G^* = G' + i \cdot G''$$

mit dem Speichermodul G' (Realteil), der für den elastischen Anteil steht (proportional zu dem Anteil der Deformationsenergie, der im Material gespeichert wird und nach Entlastung wieder aus dem Material gewonnen werden kann) und dem Verlustmodul G'' (Imaginärteil), der für den viskosen Anteil steht (er entspricht dem Verlustanteil der Energie, welcher durch innere Reibung in Wärme umgewandelt wird). Im Zuge der vorliegenden Erfindung wird unter "im wesentlichen gleichmäßig" eine Abweichung der einzelnen Messungen des Speichermoduls G' von Mittelwert von unter 10 % während 5 Wochen verstanden.

Die erfindungsgemäß zum Einsatz kommende Wachsweizenstärke kann dabei auch eine modifizierte bzw. funktionalisierte Wachsweizenstärke sein, wenn in der vorliegenden Beschreibung und in den Ansprüchen der Begriff "Wachsweizenstärke" verwendet wird, wird darunter auch eine funktionalisierte Wachsweizenstärke verstanden. In den Bereich Funktionalisierung fallen z.B. Veretherungen oder Veresterungen. Im Folgenden werden einige Derivatisierungen beschrieben, die alleine oder in Kombination miteinander zur weiteren Derivatisierung der Wachsweizenstärkederivate vorgesehen werden können. Die Art der Derivatisierung und die Rohstoffbasis der verwendeten Wachsweizenstärke hängen sehr eng mit dem speziellen Einsatzbereich des jeweiligen Produktes zusammen. Die Methoden hierzu sind an sich bekannt, im Speziellen soll der Fokus hier auf der Funktionalisierung im Slurry, im Kleister, (Semi)Trockenverfahren sowie der Funktionalisierung mittels Reaktivextrusion liegen.

Im Allgemeinen unterscheidet man bei Stärkederivaten zwischen Stärkeether und Stärkeester. Weiters kann zwischen nichtionischen, anionischen, kationischen und amphoteren als auch hydrophoben Stärkederivaten differenziert werden, welche sowohl über eine Slurry-, Kleister-, Halbtrocken- oder Trockenderivatisierung als auch über eine Derivatisierung in organischen Lösungsmitteln hergestellt werden können.

Unter anionischer und nichtionischer Funktionalisierung der Stärke werden jene Derivate zusammengefasst, bei denen die freien Hydroxylgruppen der Stärke durch anionische oder nichtionische Gruppierungen substituiert werden. Auch durch oxidative Prozesse wie bspw. die Behandlung der Stärke mit Wasserstoffperoxid oder Hypolauge oder durch ein Laccase/Mediator-System kann Stärke anionisch funktionalisiert werden.

Die anionische und nichtionische Derivatisierung lässt sich prinzipiell auf zwei Arten durchführen:

a) Durch die Funktionalisierung wird eine Veresterung der Stärke erzielt. Als Funktionalisierungsmittel dienen anorganische oder organische verschiedenwertige, meist zweiwertige, Säuren bzw. Salze davon bzw. Ester davon bzw. Anhydride davon. Auch gemischte Ester oder Anhydride können verwendet werden. Bei der Veresterung der Stärke kann diese auch mehrfach erfolgen, so dass beispielsweise Distärkephosphorsäureester hergestellt werden können. Vorzugsweise ist die erfindungsgemäß eingesetzte Stärke dabei das Resultat einer Veresterung mit Mono-, Di- oder Tricarbonsäuren mit einer Alkylkette mit 1 bis 30 Kohlenstoffatomen oder ein Carbamat, besonders bevorzugt acyliert, wie succinyliert, octenylsuccinyliert, dodecylsuccinyliert oder acetyliert.

b) Im Zuge der Funktionalisierung kommt es zu einer Veretherung der Stärke. Zum Einsatz kommen können Methyl-, Ethyl-, Hydroxyethyl-, Hydroxypropyl-, Hydroxybutyl-, Carboxymethyl-, Cyanoethyl-, Carbamoylethyl-etherstärke, oder Gemische davon.

Unter kationischer Funktionalisierung der Stärken werden jene Derivate zusammengefasst, in der durch Substitution eine positive Ladung in die Stärke eingebracht wird. Die Kationisierungsverfahren erfolgen mit Amino-, Imino-, Ammonium-, Sulfonium- oder Phosphoniumgruppen. Solche kationischen Derivate enthalten bevorzugt stickstoffhaltige Gruppen, insbesondere primäre, sekundäre, tertiäre und quartäre Amine bzw. Sulfonium- und Phosphoniumgruppen, die über Ether- oder Esterbindungen gebunden sind.

Eine weitere Gruppe stellen die amphoteren Stärken dar. Diese enthalten sowohl anionische als auch kationische Gruppen, wodurch ihre Anwendungsmöglichkeiten sehr spezifisch sind.

Meist handelt es sich um kationische Stärken, die entweder durch Phosphatgruppen oder durch Xanthate zusätzlich funktionalisiert werden.

Bei den Estern unterscheidet man zwischen einfachen Stärkeestern und gemischten Stärkeestern, wobei der (die) Substituent(en) des Esters verschiedenartig sein kann (können): Im Esterrest RCOO- kann der Rest R ein Alkyl-, Aryl-, Alkenyl-, Alkaryl- oder Aralkylrest mit 1 bis 20 Kohlenstoffatomen, vorzugsweise 1 bis 17 Kohlenstoffatomen, bevorzugt mit 1 bis 6 Kohlenstoffatomen, sein. Diese Produkte schließen die Derivate Acetat (hergestellt aus Vinylacetat oder Acetanhydrid), Propionat, Butyrat, Stearat, Phthalat, Succinat, Oleat, Maleinat, Fumarat und Benzoat ein.

Veretherungen erfolgen großteils durch Umsetzung mit Alkylenoxiden (Hydroxyalkylierung), die 1 bis 20 Kohlenstoffatome, vorzugsweise 2 bis 6 Kohlenstoffatome, insbesondere 2 bis 4 Kohlenstoffatome, enthalten, insbesondere durch Verwendung von Ethylen- und Propylenoxid. Es können aber auch Methyl-, Carboxymethyl-, Cyanethyl- und Carbamoylether hergestellt und verwendet werden. Als Beispiel für eine Carboxyalkylierung sei die Reaktion von Stärke mit Monochloressigsäure oder deren Salzen angeführt. Weiters seien speziell noch hydrophobierende Veretherungsreagenzien, wie Glycidylether oder Epoxide, genannt. Die Alkylkettenlänge der genannten Reagenzien liegt zwischen 1-20 Kohlenstoffatomen, darüber hinaus sind auch noch aromatische Glycidylether möglich.

Als Beispiel für eine Derivatisierung mit Glycidylethern seien o-Kresol-glycidether, Polypropylendi-glykolglycidether, tert-Butylphenylglycidether, Ethylhexyl-glycidether, Hexandiolglycidether und Neodekansäure-glycidester genannt.

Eine weitere Möglichkeit der Alkylierung besteht in der Alkylierung über Alkylhalogenide, beispielsweise über Methylchlorid, Dialkylcarbonate, z.B. Dimethylcarbonat (DMC) oder Dialkylsulfat z.B. Dimethylsulfat.

Verfahren zur Derivatisierung von Stärke zur Herstellung von Ethern und Estern allgemein sind in der Fachwelt gut bekannt und werden z.B. in O.B. Wurzburg (Ed.): Modified Starches: Properties and Uses, CRC Press Inc., Boca Raton, Florida, 1986, Kap. 4, 5 und 6, beschrieben.

Die für die Veresterungen, Veretherungen und Vernetzungen verwendeten und auch die chemisch nicht-funktionalisierten Stärken können zudem über thermisch-physikalische Modifikationen getempert (im Slurry) oder inhibiert (Trocken- bzw. Halbtrockenreaktion) sein.

Stärken können auch über Hydrophobierungsreagenzien funktionalisiert werden. Veretherte hydrophobe Stärken erhält man dabei, wenn die hydrophoben Reagenzien als funktionelle Gruppe ein Halogenid, ein Epoxid, ein Glycidyl, ein Halogenhydrin, eine Carbonsäure oder eine quaternäre Ammoniumgruppe enthalten. Für veresterte hydrophobe Stärken enthält das hydrophobe Reagens zumeist ein Anhydrid. Eine Hydrophobierung der Stärke kann auch über eine Abmischung einer Stärke oder eines Stärkederivates mit Fettsäureester erfolgen.

All die genannten Funktionalisierungen der Stärke finden auch für die erfindungsgemäß zum Einsatz kommende Wachsweizenstärke Verwendung, sie können nicht nur durch Umsetzung nativer Wachsweizenstärke erzielt werden, auch abgebaute Formen können zum Einsatz kommen. Die Abbauvorgänge können hydrolytisch (säurekatalysiert), oxidativ, auf mechanische, thermische, thermochemische oder enzymatische Weise erfolgen. Dadurch lässt sich die Wachsweizenstärke nicht nur strukturell verändern, die Stärkeprodukte können auch kaltwasserlöslich bzw. kaltwasserquellbar gemacht werden. So wurde beispielsweise überraschend gefunden, dass eine vernetzte Wachsweizenstärke, insbesondere eine phosphatvernetzte Wachsweizenstärke, bei der Bestimmung der Gefrier/Taustabilität eine geringere Synärese aufweist als eine vergleichbar vernetzte Wachsmaisstärke. Auch war überraschend, dass bei einem enzymatischen Abbau von Wachsweizenstärke ein im Vergleich zur Weizenstärke geringerer Enzymeinsatz ausreichend war und gleichzeitig zu einer höheren Stabilität des erhaltenen Kleisters führte, was insbesondere beim Einsatz im Papierbereich günstig ist.

Schließlich kann die erfindungsgemäß zum Einsatz kommende Wachsweizenstärke auch als Pfropf-Polymer oder als Pfropf-Copolymer vorliegen, wie beispielsweise mit Produkten aus der Gruppe der Polyvinylalkohole oder Polyester.

Vorzugsweise ist die erfindungsgemäß verwendete Wachsweizenstärke eine physikalisch modifizierte Wachsweizenstärke.

Gemäß einer bevorzugten Ausführungsform der vorliegenden Erfindung ist die Verwendung von Wachsweizenstärke in einer flüssigen bzw. zähflüssigen Zusammensetzung mit einer Viskosität von über 10.000 cP (mPa·s) bei 20 °C vorgesehen, wobei die Zusammensetzung einen pH im sauren Bereich aufweist.

Erfindungsgemäß besonders bevorzugt ist die Verwendung von Wachsweizenstärke in flüssigen bzw. zähflüssigen Lebensmitteln.

Dabei ist günstig, wenn der pH der Zusammensetzung zwischen 3,0 und 6,5 liegt.

Gemäß einer bevorzugten Ausführungsform der vorliegenden Erfindung ist die Verwendung von physikalisch modifizierter Wachsweizenstärke vorgesehen, wobei die Wachsweizenstärke bei einer Produkttemperatur zwischen 150 und 200°C, vorzugsweise zwischen 165 und 190 °C und besonders bevorzugt zwischen 175 und 180 °C physikalisch modifiziert wurde.

Gemäß einer weiteren Ausführungsform der vorliegenden Erfindung ist die Verwendung von physikalisch modifizierter Wachsweizenstärke vorgesehen, wobei die Wachsweizenstärke während einer Behandlungsdauer von 15 bis 120 Minuten, vorzugsweise während einer Behandlungsdauer von 30 bis 105 Minuten und besonders bevorzugt während einer Behandlungsdauer von 60 bis 90 Minuten physikalisch modifiziert wurde.

Günstig ist auch, wenn bei Verwendung von physikalisch modifizierter Wachsweizenstärke diese in einem Wendelschwingförderers physikalisch modifiziert wurde.

Gemäß einer anderen bevorzugten Ausführungsform der vorliegenden Erfindung ist vorgesehen, dass bei Verwendung von physikalisch modifizierter Wachsweizenstärke diese in einem Wirbelschichtofen physikalisch modifiziert wurde.

Vorzugsweise ist bei Verwendung von physikalisch modifizierter Wachsweizenstärke zur Verbesserung der Viskosität von Lebensmittel dieses ausgewählt aus Mayonnaise, Konfektcreme und Fruchtzubereitungen.

Enzymatisch abgebaute Weizenstärken werden seit langem in der Papierindustrie in der Oberflächenleimung eingesetzt. Dabei wird die Stärke mit einer Konzentration von etwa 20- 25 % enzymatisch abgebaut und dann als verdünnter Stärkekleister auf die Papieroberfläche aufgebracht.

Auch in Papierstreichfarben werden Stärkeprodukte als Co-Bindemittel eingesetzt, typischerweise stark abgebaute Dextrine, die teilweise auch trocken der Streichfarbe zugesetzt werden. Gegen den Einsatz von enzymatisch abgebauten Stärken im Papierstrich spricht die geringe Trockensubstanz der Kleister, welche den Feststoffgehalt der Streichfarben negativ beeinflussen. Wird die Trockensubstanz der Kleister erhöht, muss die Stärke auch deutlich stärker abgebaut werden, was zu einem Verlust an Bindekraft führt. Auch die Lagerung von hochkonzentrierten Kleistern ist wegen der Retrogradationsleistung problematisch und oft nicht möglich.

Überraschenderweise wurde nun gefunden, dass beim Einsatz von enzymatisch abgebauten Wachsweizenstärken in der Oberflächenleimung oder in Papierstreichfarben die Viskosität der Kleister deutlich niedriger und die Stabilität der Kleister deutlich besser ist als bei Verwendung von enzymatisch abgebauter Weizenstärke mit vergleichbaren Abbaugrad. Dadurch können hochkonzentrierte, niedrigviskose Kleister mit einem optimalen Abbaugrad hergestellt werden, die sich für den Einsatz in der Papierindustrie für die oben genannten Zwecke besonders eignen.

Die vorliegende Erfindung wird nun anhand der nachfolgenden Beispiele näher erläutert, ohne ob sie beschränkt zu sein.

## Versuchsserie 1: Thermischen Funktionalisierung von alkalisierter Wachsmaisstärke und Wachsweizenstärke und LM-AWT Untersuchungen

Alkalisierte Wachsweizenstärke (WWS) und Wachsmaisstärke (WMS) wurden unter gleichen Bedingungen bei 150°C bis 200°C für 30-120 min. in einem Wendelschwingförderer (Rohrinnendurchmesser 0,2 m, Rohrlänge 8,5 m und Rohrinnenvolumen 0,3 m$^3$, Vibrationsgeschwindigkeit 700 rpm, Motorwinkel 20° und Antriebsmotor 90%) thermisch, d.h. physikalisch, funktionalisiert und die Produkte vergleichend charakterisiert. Die nativen Ausgangsmaterialien wurden zuvor mit Natronlauge auf einen pH-Wert von 8-10 alkalisiert, dann getrocknet und vermahlen.

## Alkalisierung und Vermahlung

- 30-35 %ige Suspension der jeweiligen Stärken angesetzt,
- pH-Wert der Suspension mit 3 %iger Natronlauge auf 9,5 eingestellt,
- 30 min. Rühren bei Raumtemperatur,
- Zentrifugation mit der Sackzentrifuge (Carl Padberg Zentrifugenbau GmbH, Laborschleuder, Typ LS, Filterbeutel 11$\mu$m, Material PP),
- Trocknung im Trockenschrank bei 60°C auf einen Wassergehalt von ca. 8-12 % und
- Vermahlung der vorgetrockneten Stärken mit einer Alpinemühle (Hosokawa Alpine AG, Feinprallmühle, Typ UPZ100).

## Funktionalisierung im Wendelschwingförderer

Alle Versuche sind in 3 Zonen unterteilt. In der ersten Zone findet die Vortrocknung der alkalisierten und vermahlenen Stärke bei 130°C statt. Am Ende der Vortrocknung (Ende Zone 1) ist der Wassergehalt der Stärke bei ca. 2%. Zone 2 und 3 dienen zur Funktionalisierung der Stärken (Regeltemperatur 170°C bzw. 175°C).

Die Funktionalisierungsdauer startet mit Erreichen von Zone 2.

Bei einer Funktionalisierungsdauer von 20min. und 40min. (entspricht 20min. bzw. 40min. in Zone 2) wurden Zwischenproben gezogen. Am Ende der Funktionalisierung (Ende Zone 3) wird die heiße Stärke in einen Doppelmantelmischer (20L Lödigemischer Fa. AVA, Typ Pflugscharmischer mit Vakuumausrüstung) überführt und dort innerhalb von 20-25min. auf Raumtemperatur gekühlt. Die gekühlte Stärke ist die Endprobe des jeweiligen Versuches und wird bei der Probenbezeichnung mit "cooled" gekennzeichnet.

| Versuchsnr. | Sorte / Batch | pH | Trocknung | Funktionalisierung |
|---|---|---|---|---|
| 2019 F3 | Wachsmaisstärke Maisita 21.007 (WMS) | 9,6 | 60 min. 130°C | 60 min. 170°C |
| 2019 F4 | Wachsweizenstärke Waxydie 2017 (WMS) | 9,5 | 55 min. 130°C | 60 min. 170°C |
| 2019 F5 | Wachsmaisstärke Maisita 21.007 (WMS) | 9,6 | 60 min. 130°C | 60 min. 175°C |
| 2019 F6 | Wachsweizenstärke Waxydie 2017 (WWS) | 9,5 | 55 min. 130°C | 60 min. 175°C |

**Herstellung und Prüfung der Lebensmittelzubereitungen:**

Die nach F3 - F6 hergestellten funktionalisierten WWS und WMS wurden in Fruchtzubereitungen, Vanillecreme und Mayonnaise geprüft.

**Rheologische Messungen**

Die Messungen dienten der rheologischen Charakterisierung der Proben in Lebensmittelsystemen. Diese Messungen wurden mit dem Physica MCR-301 Rheometer (Anton Paar, AT) nach Methode AT-L 02 (Messplatte PP50, 25°C, 1mm Spaltbreite, Amplitudensweep 0,1-1000 % logarithmisch, Frequenz f = 1 Hz, Frequenzsweep: Frequenz f = 30-0,1 Hz logarithmisch) in Rotation und Oszillation vermessen und ausgewertet. Dabei wurden die Lebensmittelmittelzubereitung gekühlt gelagert und jeweils nach 24h und 1-6 Wochen rheologisch gemessen, um die Lagerstabilität bestimmen zu können. Eine hohe Lagerstabilität zeigt sich bei einem Gleichbleiben der rheologischen Parameter wie Speichermodul G' (elastischer Anteil), Verlustmodul G" (viskoser Anteil) und Verlustfaktor (tan$\delta$ = G"/G'). Exemplarisch für die Ergebnisse sind hier das Speichermodul und teilweise das Verlustmodul in den jeweiligen Abbildungen dargestellt.

**Beispiel 1: Herstellung 50%ige Mayonnaise**

**Geräte:**

- Stephan Universalmaschine UM/SK 5
- Sartorius Waage, 2 Kommastellen

**Rezeptur:**

| Komponenten: | [%] |
|---|---|
| *A* | |
| Stärke (in TS) | 3,00 |
| Wasser | 33,60 |
| Essig, 5%ig | 4,00 |
| *B* | |
| Salz | 1,20 |
| Kristallzucker | 2,00 |
| Estragon Senf | 4,00 |
| Eigelbpulver | 2,00 |
| Kaliumsorbat | 0,20 |
| *C* | |
| Öl | 50,00 |

**Herstellung:**

- Komponenten A werden eingewogen, vermischt und in den Stephankocher überführt (Glatter Messereinsatz, 10% HM, 60% TF),
- auf 80°C erhitzen und nach Erreichen wird die Temperatur für 10 Minuten gehalten,
- danach wird der Kleister auf 25°C abgekühlt,

- die Komponenten B werden hinzugefügt und für 5 Minuten unter Vakuum gerührt (50% HM, 60% TF, 200 mbar Vakuum),
  - das Öl langsam (über ca. 2 Minuten) über das Ventil im Deckel einziehen,
  - die Mayonnaise wird danach weitere 5 Minuten gerührt,
  - in Gläser abgefüllt und im Kühlschrank gelagert.

**Ergebnisse der rheologischen Messungen**

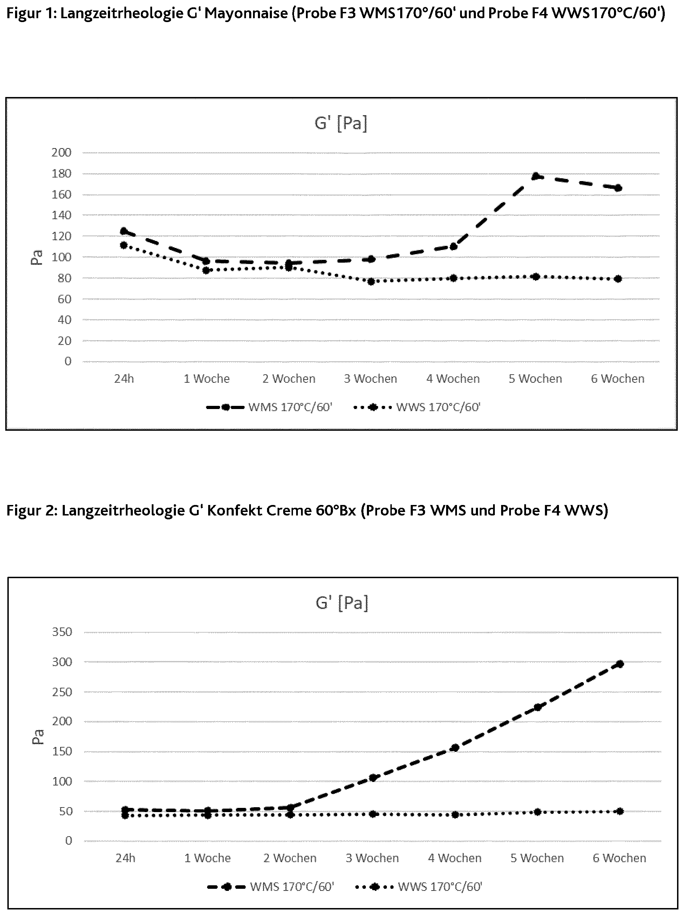

Man kann aus Abbildung 1 deutlich erkennen, dass die Mayonnaise unter Verwendung der physikalisch modifizierte WWS (untere Kurve) einen sehr gleichmäßigen Verlauf aufweist, während die Mayonnaise enthaltend die physikalisch modifizierte WMS (obere Kurve) nach 4 Wochen einen deutlichen Anstieg des Speichermoduls G' zeigt.

**Beispiel 2: Herstellung Konfekt Creme 5,5% Stärke**

**Geräte:**

- Stephan Universalmaschine UM/SK 5
- Sartorius Waage, 2 Kommastellen
- WiseStir Laborrührer HS-100D

**Rezeptur:**

| Komponenten: | [%] |
|---|---|
| Stärke (in TS) | 5,50 |
| Vollmilch | 84,43 |
| Aroma (Vanille), flüssig, 204960 | 0,03 |
| Carotin, flüssig, A1621 | 0,04 |
| Kristallzucker | 10,00 |

**Herstellung:**

- Alle trockenen Komponenten einwiegen und vermischen,
- alle feuchten Komponenten einwiegen und vermischen,
- die kalte Milchmischung mit dem Propeller-Rührer rühren und langsam die trockenen Komponenten zugeben, bis man eine homogene Masse erhält,
- die Mischung in den Stephankocher überführen (Ankerrührer, HM 10% und TF 60%, Vakuum: 200mbar),
- nach dem Anlegen des Vakuums das Produkt auf 95°C erhitzen und diese Temperatur für 10 Minuten halten,
- danach auf 30°C abkühlen, in Gläser umfüllen und im Kühlschrank lagern.

**Ergebnisse der rheologischen Messungen**

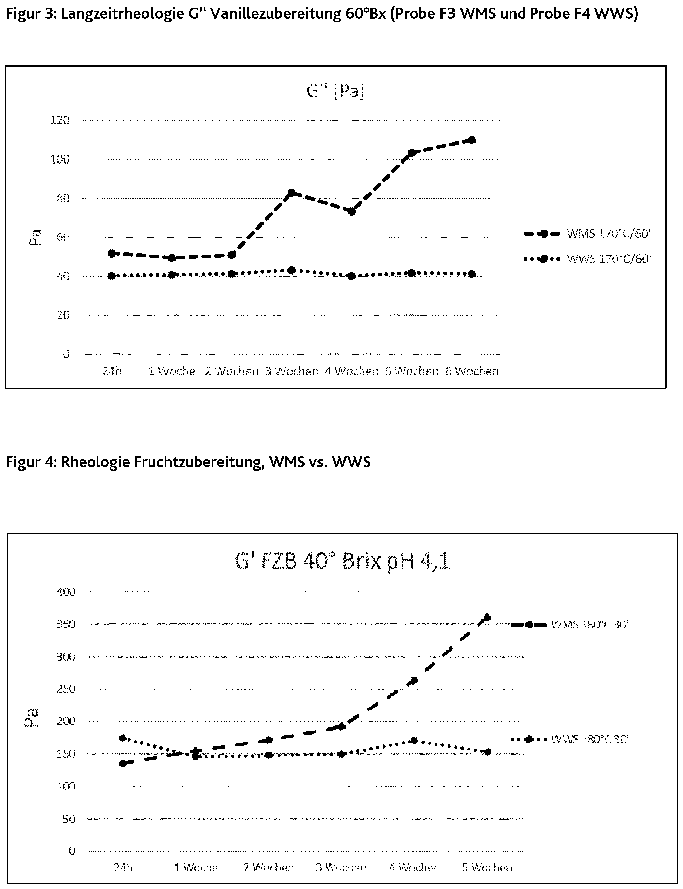

Man kann aus Abbildung 2 deutlich erkennen, dass die Viskosität der Konfektcreme enthaltend die physikalisch modifizierte WWS einen sehr gleichmäßigen Verlauf aufweist, während die Viskosität der Konfektcreme enthaltend die physikalisch modifizierte WMS nach 2 Wochen einen deutlichen Anstieg des Speichermoduls G' zeigt. Auch beim Verlustmodul zeigt sich das Phänomen auf ähnliche Weise, siehe Abbildung 3.

**Versuchsserie 2: Anwendungstechnische Untersuchungen der in der Wirbelschicht modifizierten WMS und WWS**

Im Zuge dieser Versuchsserie wurden alkalisierte WWS und WMS in der Wirbelschicht (Gesamthöhe ca. 700 mm, Innendurchmesser im Bereich der Wirbelschicht d = 80 mm, Glasfritte mit Porositat P2, P100, Magnetvibrator Typ MV1/100-3 AEG, Schwingzahl 6000/min, Fluidisierungsgas Stickstoff +2,5 % Sauerstoff, Volumenstrom 200 l/h, Fluidisierungsgeschwindigkeit 11 mm/s und Aufheizrate 12 °C/min) physikalisch funktionalisiert und die jeweils erhaltenen funktionalisierten Stärken anschließend wie in Versuchsserie 1 bei der Herstellung von Lebensmittelzubereitungen verwendet. Anschließend wurden diese Lebensmittelzubereitungen rheologisch untersucht, um sie einerseits rheologisch zu charakterisieren und andererseits auch ihre Lagerstabilität zu prüfen.

Exemplarisch werden hier die Ergebnisse der Messungen mit einer Fruchtzubereitung (40°Bx, pH4,1) dargestellt.

Folgende in der Wirbelschicht modifizierten WWS und WMS wurden in Fruchtzubereitungen geprüft:

- WWS 180°C 30'

- WMS 180°C 30'

**Beispiel 1:**

**Herstellung Fruchtzubereitung:**

Material & Methoden

**Geräte:**

- Stephan Universalmaschine UM/SK 5
- Sartorius Waage, 2 Kommastellen

**Rezeptur:**

| Komponenten: | [%] |
|---|---|
| A | |
| Stärke (in TS) | 4,44 |
| Puffer (pH 3,2 bzw. pH 4,1) | 30,90 |
| B | |
| Kaliumsorbat | 0,06 |
| Kristallzucker | 33,00 |
| C | |
| Erdbeerpüree | 31,60 |

**Herstellung:**

- Herstellung eines Stärke-Slurrys (A),
- die übrigen Komponenten (B) werden dazu gewogen und das Erdbeerpüree (C) untergerührt,
- nun wird alles in den Stephankocher überführt (Ankerrührer, 15% HM, 10% TF),
- es wird auf 98°C erhitzt und diese Temperatur für 8 Minuten gehalten,

- danach wird auf 70°C abgekühlt,
- anschließend wird ein Vakuum von 200 mbar angelegt und währenddessen auf 30°C abgekühlt,
- die fertige Zubereitung wird in Gläser umgefüllt und im Kühlschrank gelagert.

**Ergebnisse Rheologie**

Man kann aus Abbildung 4 deutlich erkennen, dass die Fruchtzubereitung enthaltend die physikalisch modifizierte WWS einen sehr gleichmäßigen Verlauf aufweist, während die Fruchtzubereitung enthaltend die physikalisch modifizierte WMS nach 3 Wochen einen deutlichen Anstieg des Speichermoduls G' zeigt. Das bedeutet, dass der Kleister der WWS offenbar stabiler ist.

**Versuchsserie 3: Gefrier-Tau Stabilität der mittels eines Wendelschwingförderers physikalisch modifizierten Wachsweizenstärke und Wachsmaisstärke**

Als Ergänzung zu den Versuchen von Untersuchung der physikalisch modifizierten WWS und WMS in Lebensmittelzubereitungen wurden die Stabilitätsanalysen durch Untersuchungen der Gefrier-Tau-Stabilität (G-T-Stab.) ergänzt.

**Herstellung der funktionalisierten Stärken**

Die jeweilige alkalisierte Stärke (pH 9,5) wurde vorgetrocknet, bis sie weniger als 2% Feuchte enthielten. Anschließend wurden sie in dem zuvor beschriebenen Wendelschwingförderer bei 195°C 30'-120' lang physikalisch funktionalisiert.

**Untersuchung der Gefrier-Tau-Stabilitäten der funktionalisierten WWS und WMS**

Dazu wurden die funktionalisierten Stärken verkleistert und tiefgekühlt. Diese Kleister wurden dann in mehreren Zyklen aufgetaut und deren Synärese bestimmt, dies geschah dadurch, dass der Kleister zentrifugiert und die Menge des an der Oberfläche befindlichen Wassers bestimmt wurde. Die Synärese entspricht dabei dem Verhältnis aus abgeschiedenem Wasser und Gesamtgewicht des Kleisters in Prozent, wobei diese für jeden Zyklus aufaddiert werden.

**Ergebnisse der Messungen**

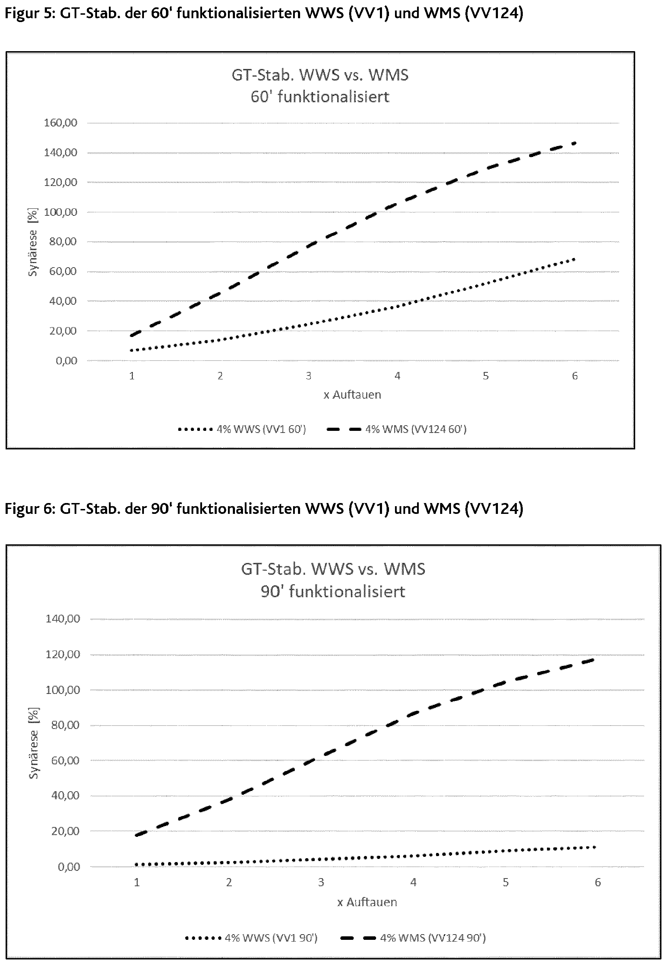

Die erfindungsgemäß zum Einsatz kommende funktionalisierte WWS zeigt gemäß Abbildung 5 sowohl bei einer 60' (Abbildung 5) als auch bei 90' (Abbildung 6) Funktionalisierung nur eine geringere Neigung zu Synärese, wobei die höchste Stabilität bei 90' Hitzebehandlung erreicht wird.

**Versuchsserie 4: enzymatischer Abbau von Wachsweizenstärke**

Es werden 480g eines 20%ige Stärkeslurrys in einem 1000 mL Becher vorbereitet. Vom gut durchgemischten Slurry wird der pH-Wert gemessen und die Probe anschließend vollständig in den Brabendermesstopf überführt. Nun werden 24, 48 oder 96 μl (0,025%, 0,05% oder 0,1% auf Stärke TS) Warozym 152A zugegeben und die Messung nach dem angegebenen Messprogramm gestartet. Direkt nach erfolgter Messung werden ca. 250-300 mL des erhaltenen Kleisters in ein 400 mL Becherglas überführt, mit kaltem Wasser innerhalb von 5 Minuten auf 50°C gekühlt und bei 100 UpM am Brookfield Viskosimeter gemessen. Vom Kleister wird auch der pH Wert ermittelt.

**Meßprogramm**

| | |
|---|---|
| Heiz-/ Kühlrate: | 3°C/min |
| Starttemperatur: | 30°C |
| Maximaltemperatur: | 95 °C |
| Obere Haltezeit: | 30 min |
| Endtemperatur: | 95°C |
| Endhaltezeit: | 0 min |
| Messdose | 1000 cmg |

**Ergebnis:**

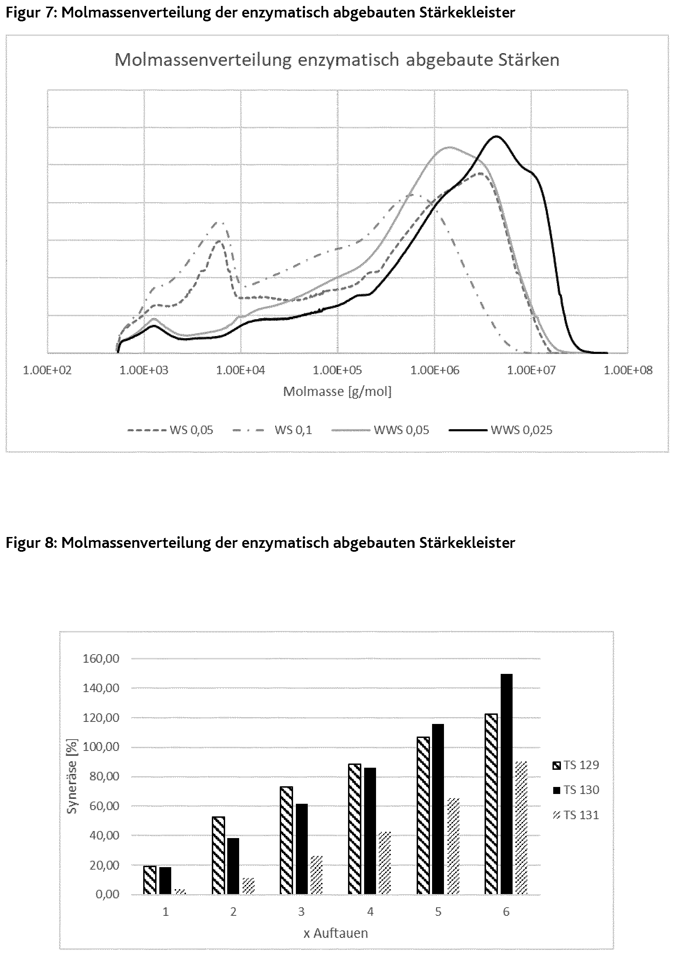

Wie in Tabelle 1 der Versuchsserie 4 ersichtlich, zeigt die WWS bei gleichem Enzymeinsatz deutlich geringere Viskositäten und auch deutlich bessere Stabilitäten im Vergleich zur Weizenstärke. Die Enzymmenge kann dadurch auf etwa ¼ der Einsatzmenge reduziert werden, dabei zeigt die WWS dann deutlich höhere Molmassen, wie in Abbildung 7 und Tabelle 2 der Versuchsserie 4 ersichtlich, was zu einer höheren Bindekraft der WWS Kleister führt.

Ein weiterer Vorteil bei Einsatz von WWS in der Papierindustrie ist, dass aufgrund des Fehlens der Amylose keine RAPs (Retrograded Amylose Particles) Bildung zu erwarten ist, welche gerade bei Einsatz der enzymatisch abgebauten Stärken im Papierstrich problematisch sind.

**Versuchsserie 4, Tabelle 1: Viskositäten**

| Stärke | Enzym [% auf Stärke] | TS [%] | Brookfield 50°C [mPas] | Brookfield 25°C [mPas] | Brookfield 24h [mPas] |
|---|---|---|---|---|---|
| WS | 0,05 | 87.06 | 4950 | 34600 | n.m. |
| WWS | 0,05 | 89.47 | 166 | 410 | 490 |
| WS | 0,1 | 87.06 | 242 | 598 | 1876 |
| WWS | 0,025 | 89.47 | 432 | 1072 | 1366 |

**Versuchsserie 4, Tabelle 2: Daten der Molmassenverteilung**

| | Mw [g/mol] | < 25.000 [%] | 25.000-1.000.000 [%] | > 1.000.000 [%] |
|---|---|---|---|---|
| WS 0,05 | 1480000 | 25,7 | 35,4 | 38,9 |
| WWS 0,05 | 1730000 | 12,2 | 43,1 | 44,7 |
| WS 0,1 | 464000 | 34,4 | 50,6 | 15,0 |
| WWS 0.025 | 3900000 | 9,4 | 28,7 | 61,9 |

**Versuchsserie 5: Bestimmung der Gefrier/Taustabilität von phosphatvernetzter Wachsweizenstärke im Vergleich mit Wachsmaisstärke**

**Durchführung:**

750g Stärke (WMS oder WWS, siehe nachstehende Tabelle) in TS werden auf 1973,68g mit Deionat aufgefüllt (38%iger Slurry). Dieser Slurry wird im Wasserbad auf 40°C erwärmt und mit 3%iger NaOH auf pH 10,5 gestellt. Danach werden 2,2g $CaCl_2$ (=2,914g $CaCl_2*2H_2O$) in 8,8g $H_2O$ vorgelöst, zugegeben und für 20 Minuten bei pH 10,5 gerührt. NaTMP (Einwaage siehe Tabelle unten) wurde ebenfalls im Wasser vorgelöst zum Slurry zugegeben und für 35 Minuten bei 40°C und pH 10,5 gerührt. Danach wird der pH Wert mit 8%iger HCl auf pH 5-5,2 gestellt. Es wird mit der Laborzentrifuge entwässert und mit Deionat gewaschen bis das Waschwasser eine Leitfähigkeit unter $100\mu S$ hat. Danach wird im Retsch Trockner getrocknet.

| Ansatz Nr. | Rohstoff | Einwaage NaTMP [g] | % auf TS Stärke |
|---|---|---|---|
| TS125 | WWS Waximum 2018 | 1,9 | 0,25% |
| TS126 | WMS | 1,9 | 0,25% |
| TS129 | WMS | 0,8 | 0,107% |
| TS130 | WWS | 0,4 | 0,053% |
| TS131 | WWS | 0,25 | 0,033% |

**Analysen:**

### Gefrier-Tau-Stabilität eines 4%igen Kleisters, neutral

|  | Syneräse, über alle Zyklen aufsummiert [%] | | |
| Anzahl | TS 129 | TS 130 | TS 131 |
| Auftau-Zyklen | WMS | WWS | WWS |
| 1 | 18,94 | 18,65 | 3,92 |
| 2 | 52,79 | 38,19 | 11,61 |
| 3 | 73,08 | 61,85 | 26,49 |
| 4 | 88,49 | 86,20 | 42,76 |
| 5 | 106,45 | 115,63 | 65,61 |
| 6 | 122,31 | 149,44 | 90,15 |

Sowohl TS 131 als auch TS 130 zeigen gemäß Abbildung 8 eine bessere Gefrier-Taustabilität mit weniger Wasserabscheidung, zumindest bis zu 4 Zyklen. TS 131 zeigt eine Überlegenheit über alle Zyklen als die beiden anderen untersuchten Stärken. TS 129 und TS130 zeigen größtenteils ähnliche Gefrier-Tau-Stabilitäten, wobei TS 130 zu Beginn weniger und nach mehr als 4 Zyklen mehr Syneräse als TS129 zeigt.

### Versuchsserie 6: Vergleich von chemisch modifizierten Wachsweizenstärken mit den chemisch modifizierten Wachsmaisstärken

**Zusammenfassung**

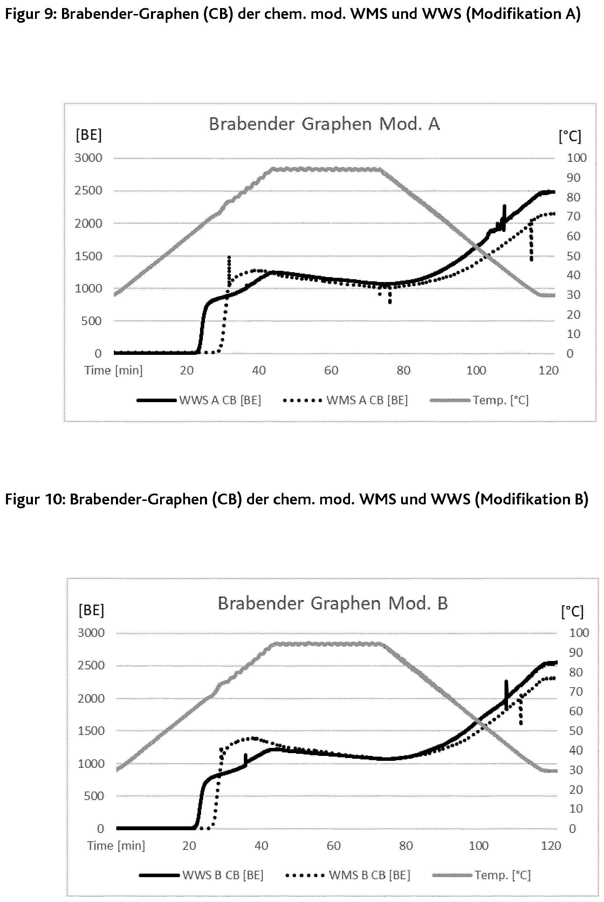

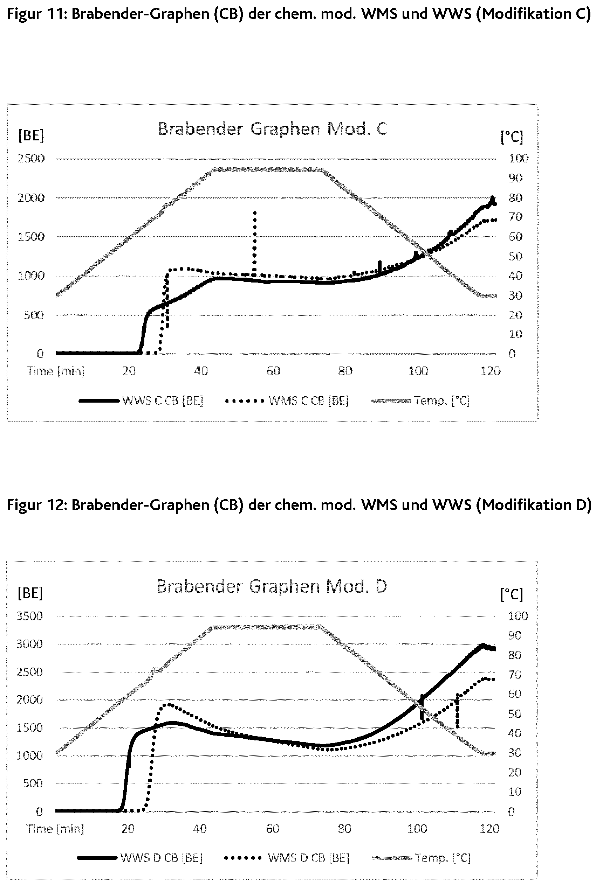

Es wurden chemisch modifizierte Wachsweizenstärken (WWS) und analog chemisch modifizierte Wachsmaisstärken hergestellt und auf ihre Kleisterstabilität unter Hitze- und Säureeinwirkung untersucht. Eine höhere Hitzestabilität schlägt sich in einem niedrigeren Breakdown im Brabender-Viscographen nieder, die höhere Säurestabilität kann man anhand der höheren Endviskosität im Sauren durch Messung im Citratbrabender (CB) erkennen (Beispiele 1-4 der Versuchsserie 6, Tabelle 1, Abbildung 9 bis 12).

**Herstellung der modifizierten Stärken:**

Die Prozentangaben in den Rezepturen beziehen sich immer auf Trockensubstanz-Einwaage der Stärke, der Slurry wird jeweils mit Deionat angesetzt.

**Beispiel 1: Herstellung von acetylierte, adipatvernetzter Wachsweizenstärke (WWS) und Wachsmaisstärke (WMS) (Modifikation A, Typ E1422)**

**Musterbezeichnungen:**

- WWS A, WMS A

**Rezeptur:**

- 38% (w/w) Slurry mit WWS oder WMS
- 0,8% (w/w) Reaktionsmischung (1:3 Adipinsäure & Essigsäureanhydrid)
- 3,3% (w/w) Essigsäureanhydrid

**Durchführung der Modifikation:**

- Herstellung Slurry
- auf 30°C-35°C aufheizen
- Mit 3% NaOH pH 8-9 stellen; 1h bei 30°C-35°C rühren

- Zugabe Reaktionsmischung
- pH 8-9 mit 3%iger NaOH
- Essigsäureanhydrid zugeben
- pH8-9 mit 3%iger NaOH halten
- Slurry mit 8%iger HCl auf pH 5-6 absenken, entwässern, trocknen.

**Beispiel 2: Herstellung von acetylierte, adipat-vernetzter Wachsweizenstärke (WWS) und Wachsmaisstärke (WMS) (Modifikation B, Typ E1422)**

**Musterbezeichnungen:**

- WWS B, WMS B

**Rezeptur:**

- 38% (w/w) Slurry mit WWS oder WMS
- 0,7% (w/w) Reaktionsmischung (1:3 Adipinsäure & Essigsäureanhydrid)
- 7,4% (w/w) Essigsäureanhydrid

Durchführung der Modifikation: wie Beispiel 1.

**Beispiel 3: Herstellung von acetylierte, adipat-vernetzter Wachsweizenstärke (WWS) und Wachsmaisstärke (WMS) (Modifikation C, Typ E1422)**

**Musterbezeichnungen:**

- WWS C, WMS C

**Rezeptur:**

- 38% (w/w) Slurry mit WWS oder WMS
- 1,3% (w/w) Reaktionsmischung (1:3 Adipinsäure & Essigsäureanhydrid)
- 7,4% (w/w) Essigsäureanhydrid

Durchführung der Modifikation wie Beispiel 1.

**Beispiel 4: Herstellung von propoxylierten, Phosphat-vernetzter Wachsweizenstärke (WWS) und Wachsmaisstärke (WMS) (Modifikation D, Typ E1442)**

**Musterbezeichnungen:**

- WWS D WMS D

**Rezeptur:**

- 38% (w/w) Slurry mit WWS oder WMS

- 13% (w/w) Natriumsulfat
- 0,03% (w/w) Natriumtrimetaphosphat (NTMP)
- 9,8% (w/w) Propylenoxid auf Stärke TS
- NaOH 3% für Alkalisierung
- H2SO4 10% für Neutralisation

**Durchführung der Modifikation:**

- Herstellung Slurry
- mit 3%iger NaOH eine Alkalität von 0,6-1ml 0,1N HCl / g Slurry einstellen
- auf 30°C aufheizen
- Zugabe NTMP
- Zugabe Propylenoxid
- Temperatur auf 35°C-40°C halten erhöhen
- pH mit 10%iger H2SO4 auf pH 4,0 -5,0 stellen
- entwässern und trocknen.

**Analysen der modifizierten Stärken:**

Das Verkleisterungs-Verhalten wird im sauren Milieu mittels Brabender Viscograph-E® (Brabender GmbH) nach ARIC Methode B1.9 (Citratbrabender=CB, pH3,5) durchgeführt.

Die für die Bewertung der Hitze- und Säurestabilität entscheidenden Auswertepunkte sind:

- **Breakdown:** Differenz zwischen Peakviskosität (maximale Viskosität in der Erhitzungsphase) und Viskosität zu Beginn der Abkühlphase (Ende Haltezeit bei 95°C) als Maß für die Hitzestabilität

- **Endviskosität:** Viskosität am Ende der Kühlphase als Maß für die Säurestabilität beim Citratbrabender

**Ergebnisse Viskositäts-Messung**

Die modifizierte WWS und WMS werden den Brabender-Aufkochungen unterzogen und anhand der Auswertepunkte bewertet.

Die chemisch modifizierten Wachsweizenstärken weisen bei den in den Beispielen 1-4 der Versuchsserie 6 beschriebenen Modifikationen eine höhere Hitzestabilität sowie eine signifikant höhere Säurestabilität im Gegensatz zur analog chemisch modifizierten Wachsmaisstärke auf. Die höhere Hitzestabilität schlägt sich in einem niedrigeren Breakdown nieder. Die höhere Säurestabilität der modifizierten waxy Weizenstärke (WWS) im Vergleich zur analog modifizierten Wachsmaisstärke kann man anhand der höheren Endviskosität im Citratbrabender (CB) erkennen (Beispiele 1-4 der Versuchsserie 6, Tabelle 1, Abbildung 9 bis 12). Dieser Vorteil schlägt sich in den Modifikationen A bis D nieder, womit eine breite Variation der Modifikation abgedeckt ist.

## Versuchsserie 6, Tabelle 1: Auswertepunkte der nach Modifikation A mod. Stärken im sauren Milieu (CB)

| | | Verkleisterungs-temperatur [°C] | Peak-viskosität [BU] | Break-down [BU] | End-viskosität [BU] |
|---|---|---|---|---|---|
| Mod. A | WMS A CB | 71,1 | 1280 | 280 | 2146 |
| Mod. A | WWS A CB | 62,7 | 1252 | **182** | **2486** |
| Mod. B | WMS B CB | 67,4 | 1390 | 311 | 2315 |
| Mod. B | WWS B CB | 60,9 | 1221 | **143** | **2551** |
| Mod. C | WMS C CB | 70,4 | 1100 | 133 | 1720 |
| Mod. C | WWS C CB | 62,5 | 970 | **56** | **1924** |
| Mod. D | WMS D CB | 64,7 | 1912 | 795 | 2368 |
| Mod. D | WWS D CB | 55,2 | 1592 | **411** | **2910** |

**Versuchsserie 7: Herstellung von Starch Blends und Untersuchung der synergetischen Effekte bei den Mischungen**

**Zusammenfassung**

Die nach einem Mischungsversuchsplan erstellten Stärke-Mischungen, hier hergestellt aus Kartoffel-, Mais-, Wachsmais- oder Wachsweizenstärke, wurden auf ihre Brabender-Viskositätsentwicklungen, ihr rheologisches Verhalten und ihre Textur untersucht. Hierbei konnten aufgrund synergetischer Effekte überraschende Unterschiede zwischen den beiden Wachs-Stärke-Typen festgestellt werden. Vor allem die höhere Säurestabilität und die Ausbildung festerer Kleister unter sauren Bedingungen stellt bei der Wachsweizenstärke ein überraschendes Ergebnis dar.

**Durchführung**

**Herstellung der Stärkemischungen (Blends)**

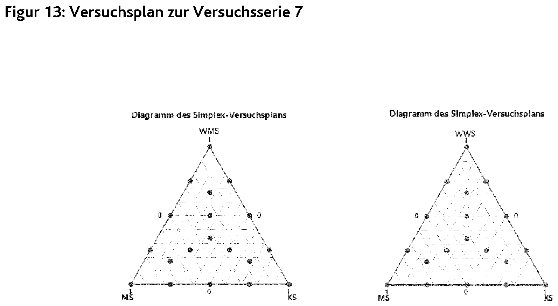

Die Blends wurden aus nativen Stärken nach einem Versuchsplan (Abbildung 13) aus jeweils 3 nativen Stärke hergestellt. Die Mischung der nativen Stärken erfolgte im Zweiachsmischer (Collomix GmbH) mit drei Minuten Mischzeit, bei 70 RPM horizontal und 10 RPM vertikal. Bei den Einwaagen wurde die Trockensubstanz der nativen Stärken in den Mischungen berücksichtigt. Das gewünschte Endgewicht pro Blend betrug 500 g Trockensubstanz.

In Abbildung 13 werden die Versuchspunkte in den Mischungsversuchsplänen 1 und 2 dargestellt. Der linke Versuchsplan (Versuchsplan 1) zeigt dabei den Simplex-Gitter Versuchsplan mit den drei Komponenten MS (Maisstärke), KS (Kartoffelstärke), WMS (Wachsmaisstärke), das rechte Bild (Versuchsplan 2) zeigt den Simplex-Gitter Versuchsplan mit den drei Komponenten MS (Maisstärke), KS (Kartoffelstärke), WWS (Wachsweizenstärke).

**Methode Brabender**

30 g Trockensubstanz eines nativen Stärke-Blends mit 450 g Flüssigkeit in einem 600 mL Becherglas eingewogen und gemischt. Jeder Stärke-Blend wurde, sowohl mit deionisiertem Wasser für die Neutralbrabender (NB), als auch mit Citratpuffer (pH 3,5) für die Citratbrabender (CB), auf 480 g aufgefüllt und im Anschluss mit einem Laborlöffel für die weitere Verwendung im Viskosimeter (Viscograph - E, Brabender) aufgerührt. Die zu untersuchenden Stärke-Blends wurden in deionisiertem Wasser oder mit Citratpuffer (pH 3,5), verkleistert, um den Einfluss des pH-Werts auf die Eigenschaften der nativen Stärke-Blends zu zeigen.

**Ergebnisse Brabender**

Vergleicht man die beiden Versuchspläne, so ergeben sich vor allem bei hohen Einsatzmengen von Kartoffelstärke (≥ 66,67 %) oder bei Mischungen der drei nativen Stärken mit Wachsweizenstärke überraschenderweise höhere Peakviskositäten als bei Wachsmaisstärke (Tabelle 1 von Versuchsserie 7). Die Wachsweizenstärke hat unter neutralen Bedingungen höhere Endviskositäten als die Wachsmaisstärke (Tabelle 2 von Versuchsserie 7).

**Versuchsserie 7, Tabelle 2: Peak-Viskositäten der Blends**

| Mischung (WXS*/ MS/KS) | | Peak-Viskosität WMS | Peak-Viskosität WWS |
|---|---|---|---|
| | Brabender-Art | [BE] | [BE] |
| 16,6/16,6/66,6 | NB | 1400 | 1550 |
| 25/0/75 | NB | 1750 | 2100 |
| 25/25/50 | NB | 1000 | 1100 |
| *): WMS oder WWS | | | |

**Versuchsserie 7, Tabelle 3: End-Viskosität der Blends**

| Mischung (WXS*/ MS/KS) | | End-Viskosität WMS | End-Viskosität WWS |
|---|---|---|---|
| | Brabender-Art | [BE] | [BE] |
| 25/25/50 | NB | 1100 | 1200 |
| 75/0/25 | NB | 700 | 850 |
| 50/25/25 | NB | 800 | 850 |
| 33/33/33 | NB | 900 | 1000 |
| *): WMS oder WWS | | | |

**Ergebnisse Rheologie**

Die Höhe der Fließgrenze gibt Aufschluss über die Festigkeit der erhaltenen Kleister. Definiert ist sie als der Schnittpunkt von G' und G", auch Crossover genannt. Ab dem Überschreiten dieses Punktes weist die interne Struktur der Probe eine irreversible Veränderung auf.

Beim Vergleich der beiden Wachs-Stärke-Typen können überraschende Unterschiede aufgezeigt werden. Die Crossover-Werte von Kleistern mit Wachsweizenstärke sind bei Mischungen aus drei nativen Stärken, mit Einsatz von ≥ 50 % Mais- und Kartoffelstärke, höher als die mit Wachsmaisstärke (Tabelle 3 von Versuchsserie 7).

Der Vergleich der Mischungen der drei nativen Stärken aus Versuchsplan 1 und 2, bei Einsatz von Mais- und Kartoffelstärke mit ≥ 50 %, zeigt auch höhere Verlustmodule (G") in Versuchsplan 2. Das bedeutet, dass Wachsmais- und Wachsweizenstärke zwar in Kombination mit Mais- oder Kartoffelstärke die gleichen rheologischen Eigenschaften aufweisen, in Kombination mit ≥ 50 % Mais- und Kartoffelstärke jedoch bilden die Mischungen mit Wachsweizenstärke die festeren Kleister aus (Tabelle 4 von Versuchsserie 7).

**Versuchsserie 7, Tabelle 4: Cross-Over Werte der Blends**

| Mischung (WXS*/ MS/KS) | | Cross-Over WMS | Cross-Over WWS |
|---|---|---|---|
| | Brabender-Art | [Pa] | [Pa] |
| 16,6/16,6/66,6 | NB | 50 | 60 |
| 16,6/16,6/66,6 | CB | 60 | 70 |
| 25/0/75 | NB | 30 | 40 |
| 25/0/75 | CB | 35 | 40 |
| *): WMS oder WWS | | | |

**Versuchsserie 7, Tabelle 5: Verlustmodule der Blends**

| Mischung (WXS*/ MS/KS) | | Verlustmodul G" WMS | Verlustmodul G" WWS |
|---|---|---|---|
| | Brabender-Art | [Pa] | [Pa] |
| 16,6/16,6/66,6 | NB | 25 | 30 |
| 16,6/16,6/66,6 | CB | 26 | 29 |
| 25/0/75 | NB | 23 | 26 |
| 25/0/75 | CB | 19 | 22 |
| *): WMS oder WWS | | | |

**Brookfield-Viskosität der Stärkekleister**

Die Viskosität der Gele wurde, nach 24 Stunden Lagerzeit bei 4°C, mit dem Viskosimeter (Brookfield Ametek DV-1, Ametek. Inc. Brookfield) gemessen. Die Spindelgröße des Brookfield-Viskosimeters wurde an die Festigkeit der Gele angepasst. Die dabei erhaltenen Werte zeigen die dynamische Viskosität in mPa*s. Zwischen Citratbrabender und Neutralbrabender zeigen sich, wie auch schon bei der Endviskosität ersichtlich, deutliche Unterschiede in der Festigkeit der erhaltenen Produkte.

Einen interessanten Unterschied gibt es in der Viskosität bei Mischungen mit 75% Maisstärke und 25 % Wachsstärke (25/75/0). Die Wachsweizenstärke bildet im sauren Milieu mit großen Anteilen an Maisstärke festere interne Netzwerke als die Wachsmaisstärke (Tabelle 5 von Versuchsserie 7).

**Versuchsserie 7, Tabelle 5: Brookfield-Viskositäten der Blends**

| Mischung (WXS*/MS/KS) | | Brookfield-Viskosität mit WMS | Brookfield-Viskosität mit WWS |
|---|---|---|---|
| | Brabender-Art | [m.Pas] | [m.Pas] |
| 66,6/16,6/16,6 | NB | 1000 | 500 |
| 66,6/16,6/16,6 | CB | 9000 | 11000 |
| 75/0/25 | NB | 1000 | 1000 |
| 75/0/25 | CB | 9000 | 15000 |
| 25/75/0 | NB | 8000 | 13000 |
| 25/75/0 | CB | 11000 | 12000 |
| *): WMS oder WWS | | | |

**Patentansprüche**

1. Verwendung von Wachsweizenstärke als Viskositätsverbesserer in einer flüssigen bzw. zähflüssigen Zusammensetzung, **dadurch gekennzeichnet, dass** die viskositätsverbesserte Zusammensetzung einen im wesentlichen gleichmäßigen Verlauf des Speichermoduls G' über einen Zeitraum von 6 Wochen zeigt.

2. Verwendung nach Anspruch 1, **dadurch gekennzeichnet, dass** die Wachsweizenstärke eine physikalisch modifizierte Wachsweizenstärke ist.

3. Verwendung von Wachsweizenstärke nach einem der vorhergehenden Ansprüche in einer flüssigen bzw. zähflüssigen Zusammensetzung mit einer Viskosität von über 10.000 cP (mPa·s) bei 20 °C, **dadurch gekennzeichnet, dass** die Zusammensetzung einen pH im sauren Bereich aufweist.

4. Verwendung von Wachsweizenstärke nach einem der vorhergehenden Ansprüche in flüssigen bzw. zähflüssigen Lebensmitteln.

5. Verwendung von Wachsweizenstärke nach einem der Ansprüche 3 oder 4, **dadurch gekennzeichnet, dass** der pH der Zusammensetzung zwischen 3,0 und 6,5 liegt.

6. Verwendung von Wachsweizenstärke nach einem der Ansprüche 2 bis 6, **dadurch gekennzeichnet, dass** die Wachsweizenstärke bei einer Produkttemperatur zwischen 150 und 200 °C physikalisch modifiziert wurde.

7. Verwendung von Wachsweizenstärke nach einem der Ansprüche 2 bis 5, **dadurch gekennzeichnet, dass** die Wachsweizenstärke bei einer Produkttemperatur zwischen 165 und 190 °C physikalisch modifiziert wurde.

8. Verwendung von Wachsweizenstärke nach einem der Ansprüche 2 bis 5, **dadurch gekennzeichnet, dass** die Wachsweizenstärke bei einer Produkttemperatur zwischen 175 und 180 °C physikalisch modifiziert wurde.

9. Verwendung von Wachsweizenstärke nach einem der Ansprüche 2 bis 8, **dadurch gekennzeichnet, dass** die Wachsweizenstärke während einer Behandlungsdauer von 15 bis 120 Minuten physikalisch modifiziert wurde.

10. Verwendung von Wachsweizenstärke nach einem der Ansprüche 2 bis 8, **dadurch gekennzeichnet, dass** die Wachsweizenstärke während einer Behandlungsdauer von 30 bis 105 Minuten physikalisch modifiziert wurde.

11. Verwendung von Wachsweizenstärke nach einem der Ansprüche 2 bis 8, **dadurch gekennzeichnet, dass** die Wachsweizenstärke während einer Behandlungsdauer von 60 bis 90 Minuten physikalisch modifiziert wurde.

12. Verwendung von Wachsweizenstärke nach einem der Ansprüche 2 bis 11, **dadurch gekennzeichnet, dass** die Wachsweizenstärke in einem Wendelschwingförderers physikalisch modifiziert wurde.

13. Verwendung von Wachsweizenstärke nach einem der Ansprüche 2 bis 12, **dadurch gekennzeichnet, dass** die Wachsweizenstärke in einem Wirbelschichtofen physikalisch modifiziert wurde

14. Verwendung von Wachsweizenstärke nach einem der Ansprüche 4 bis 14, **dadurch gekennzeichnet, dass** das Lebensmittel ausgewählt ist aus Mayonnaise, Konfektcreme und Fruchtzubereitungen.

Figur 1: Langzeitrheologie G' Mayonnaise (Probe F3 WMS170°/60' und Probe F4 WWS170°C/60')

Figur 2: Langzeitrheologie G' Konfekt Creme 60°Bx (Probe F3 WMS und Probe F4 WWS)

**Figur 3: Langzeitrheologie G" Vanillezubereitung 60°Bx (Probe F3 WMS und Probe F4 WWS)**

**Figur 4: Rheologie Fruchtzubereitung, WMS vs. WWS**

**Figur 5: GT-Stab. der 60' funktionalisierten WWS (VV1) und WMS (VV124)**

**Figur 6: GT-Stab. der 90' funktionalisierten WWS (VV1) und WMS (VV124)**

**Figur 7: Molmassenverteilung der enzymatisch abgebauten Stärkekleister**

Molmassenverteilung enzymatisch abgebaute Stärken

Molmasse [g/mol]

- - - - - WS 0,05    — · — WS 0,1    ~~~~~~ WWS 0,05    ——— WWS 0,025

**Figur 8: Molmassenverteilung der enzymatisch abgebauten Stärkekleister**

Syneräse [%]

x Auftauen

TS 129
TS 130
TS 131

**Figur 9: Brabender-Graphen (CB) der chem. mod. WMS und WWS (Modifikation A)**

**Figur 10: Brabender-Graphen (CB) der chem. mod. WMS und WWS (Modifikation B)**

**Figur 11: Brabender-Graphen (CB) der chem. mod. WMS und WWS (Modifikation C)**

**Figur 12: Brabender-Graphen (CB) der chem. mod. WMS und WWS (Modifikation D)**

Figur 13: Versuchsplan zur Versuchsserie 7

Diagramm des Simplex-Versuchsplans

Diagramm des Simplex-Versuchsplans

**Europäisches Patentamt**
**European Patent Office**
**Office européen des brevets**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | WO 2020/086916 A1 (ARCHER DANIELS MIDLAND CO [US]) 30. April 2020 (2020-04-30)<br>* Seiten 12,15; Anspruch 1; Abbildung 1; Tabellen 1-9 *<br>----- | 1-14<br><br>1-14 | INV.<br>C08B30/20<br>A23L29/212 |
| X<br>Y | US 2002/037352 A1 (MESSAGER ARNAUD [FR] ET AL) 28. März 2002 (2002-03-28)<br>* Absätze [0062], [0103]; Tabelle 4 *<br>----- | 1-14<br><br>1-14 | |
| X | ZHANG BO ET AL: "The influence of repeated versus continuous dry-heating on the performance of wheat starch with different amylose content",<br>LWT- FOOD SCIENCE AND TECHNOLOGY, ACADEMIC PRESS, UNITED KINGDOM,<br>Bd. 136, 12. Oktober 2020 (2020-10-12),<br>XP086395308,<br>ISSN: 0023-6438, DOI:<br>10.1016/J.LWT.2020.110380<br>[gefunden am 2020-10-12] | 1-14 | |
| Y | * Absätze [2.1.], [3.5.]; Abbildung 1 *<br>----- | 1-14 | RECHERCHIERTE SACHGEBIETE (IPC) |
| Y | HU XIAO-PEI ET AL: "Effect of single-, dual-, and triple-retrogradation treatments onin vitrodigestibility and structural characteristics of waxy wheat starch",<br>FOOD CHEMISTRY, ELSEVIER LTD, NL,<br>Bd. 157, 24. Februar 2014 (2014-02-24),<br>Seiten 373-379, XP028833553,<br>ISSN: 0308-8146, DOI:<br>10.1016/J.FOODCHEM.2014.02.065<br>* Absatz [2.3.] *<br>----- | 1-14 | C08B<br>A23L |

Der vorliegende Recherchenbericht wurde für alle Patentansprüche erstellt

| Recherchenort | Abschlußdatum der Recherche | Prüfer |
|---|---|---|
| München | 17. August 2021 | Friedrich, Christof |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
  Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 16 3062

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-08-2021

| Im Recherchenbericht angeführtes Patentdokument | Datum der Veröffentlichung | Mitglied(er) der Patentfamilie | Datum der Veröffentlichung |
|---|---|---|---|
| WO 2020086916 A1 | 30-04-2020 | EP 3870615 A1<br>WO 2020086916 A1 | 01-09-2021<br>30-04-2020 |
| US 2002037352 A1 | 28-03-2002 | AT 242271 T<br>AU 771482 B2<br>CA 2367758 A1<br>DE 60003176 T2<br>EP 1171472 A1<br>ES 2202084 T3<br>FR 2791686 A1<br>US 2002037352 A1<br>WO 0058366 A1 | 15-06-2003<br>25-03-2004<br>05-10-2000<br>08-04-2004<br>16-01-2002<br>01-04-2004<br>06-10-2000<br>28-03-2002<br>05-10-2000 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2019133836 A1
- WO 2019089656 A1
- WO 2019055381 A1
- WO 2019005861 A1
- WO 2018112383 A1
- US 20190380370 A1
- WO 2014042537 A1
- WO 03075681 A1
- WO 02096220 A1

- US 20180263268 A1
- US 20150239994 A1
- US 20070122536 A1
- US 20030138541 A1
- US 20030008049 A1
- US 20020037352 A1
- EP 2866581 B1
- CN 104759309 A

**In der Beschreibung aufgeführte Nicht-Patentliteratur**

- Modified Starches: Properties and Uses. CRC Press Inc, 1986